# EUROPÄISCHE PATENTSCHRIFT

(11) **EP 1 652 877 B1**
(45) Veröffentlichungstag und Bekanntmachung des Hinweises auf die Patenterteilung: **14.12.2011**
(21) Anmeldenummer: 04025535.8
(22) Anmeldetag: 27.10.2004
(51) Int. Cl.: C08K 3/04, C08K 3/36, C08K 7/00, F16C 33/16

(54) **Verschleissbeständiger Gleitwerkstoffkörper aus Graphit und Kunstharzbinder**
Wear resistant sliding material comprising graphite and a resinous binder
Matériau de glissage en graphite et un liant résineux résistant à l'usure

(43) Veröffentlichungstag der Anmeldung: 03.05.2006
(73) Patentinhaber: SGL Carbon SE, 65203 Wiesbaden (DE)
(72) Erfinder: Woizenko, Adi, 51143 Köln (DE); Metzinger, Thomas, Dr., 53508 Mayschoss (DE)

(56) Entgegenhaltungen:
- US-A- 4 508 855
- US-A- 6 162 767
- US-B1- 6 258 143
- DATABASE CA [Online] CHEMICAL ABSTRACTS SERVICE, COLUMBUS, OHIO, US; OZAKI, SHINICHI: "Fabrication of polymeric roller bearing for drying and dyeing apparatus" XP002317566 gefunden im STN Database accession no. 1999:271320 -& JP 11 117933 A (TOYO TANSO CO., JAPAN) 27. April 1999 (1999-04-27)

## Beschreibung

Die Erfindung betrifft Gleitwerkstoffkörper aus Graphit und Kunstharzbinder mit verbesserten Verschleißeigenschaften.
Gleitwerkstoffkörper werden überall dort eingesetzt, wo sich mindestens zwei Maschinen- oder Geräteteile mit der technischen Aufgabe, einen möglichst geringen Reibungswiderstand zu erreichen, unter einer gewissen Andruckkraft berühren und relativ zueinander bewegen. Bei solchen Bewegungen soll der an den Reibflächen entstehende Abrieb sowie die dort entwickelte Reibungswärme ein Minimum erreichen. Wo eine ausreichende Schmierung der sich relativ zueinander bewegenden Teile gewährleistet ist, bereitet die Auswahl geeigneter Werkstoffe für die aneinander gleitenden Teile keine Schwierigkeiten. Es gibt jedoch auch Anwendungen, bei denen völlig ohne Schmierung gearbeitet werden muss und Trockenlauf vorliegt. Beispiele für derartige Anwendungen sind Trenn- oder Drehschieber in Pumpen und Verdichtern.
Für diese Anwendungsfälle werden Gleitwerkstoffkörper eingesetzt, die Substanzen mit einer eigenen Schmierfähigkeit wie Graphit oder Molybdänsulfid, enthalten. Allerdings reicht die Schmierfähigkeit der meisten dieser Trockenschmierstoffe in befriedigendem Maße nur soweit, wie sich noch ein dünner Feuchtigkeitsfilm, der beispielsweise auf den Feuchtigkeitsgehalt der umgebenden Atmosphäre zurückgeht, aufbauen kann. Wenn wie beim Arbeiten in sehr trockener Luft, in stark getrockneten Medien, unter Vakuum, in großen Höhen oder bei hohen Temperaturen auch dies nicht mehr gegeben ist, genügen auch die vorgenannten, eine Eigenschmierwirkung aufweisenden Stoffe den Anforderungen nicht mehr, und es sind weitere Maßnahmen erforderlich.

Aus dem Stand der Technik ist bekannt, in diesen Fällen poröse Gleitwerkstoffkörper mit Kunstharzen wie Phenol- oder Furanharzen, Polyethylen, Polyestern, Polyacrylatharzen, per- oder teilfluorierten organischen Polymeren oder auch mit anorganischen Verbindungen wie Salzen oder Gläsern zu imprägnieren. Siehe z.□B. Robert Paxton "Manufactured Carbon: A Self-Lubricating Material for Mechanical Devices", CRC Press Inc., Florida 1979. Von den anorganischen Verbindungen werden Phosphate und Borverbindungen bevorzugt eingesetzt.
Neben der aufwendigen Herstellung zeigte sich jedoch auch die vergleichsweise große Bruchanfälligkeit dieser keramischen Bauteile als ein wesentlicher Nachteil bezüglich der Verwendung als Trenn- oder Drehschieber in Pumpen un Verdichtern. Wegen dieser Nachteile hat man versucht, weniger spröde Gleitwerkstoffe zu entwickeln, die preiswerter herstellbar sind. Das Ergebnis waren mit Kohlenstoff oder Graphit gefüllte, kunstharzgebundene Gleitwerkstoffkörper, die zwar wesentlich weniger aufwendig herstellbar und erheblich weniger bruchanfällig sind, die jedoch bezüglich ihrer Lauf- und Verschleißeigenschaften hinter den keramisch aufgebauten Gleitwerkstoffkörpern zurückbleiben.

In EP 915129 wurde ein mit Kohlenstoff gefüllter, kunstharzgebundener Gleitwerkstoffkörper offenbart, welcher durch Zugabe von Zn-Phosphat einen verringerten Verschleiß aufweist. Die Zugabe hygroskopischer Verbindungen, wie etwa von Phosphaten, bringt jedoch auch bei der Herstellung kunstharzgebundener Gleitwerkstoffkörper verschiedene Komplikationen mit sich, die sich produktionstechnisch nur mit hohem Aufwand lösen lassen. Des weiteren erweisen sich allein die Kosten der zugesetzten Chemikalien als prohibitiv für eine kommerzielle Anwendung der offenbarten Erfindung. Daneben ist die, durch die Zugabe von Zn-Phosphat erzielte Verbesserung, der Verschleißcharakteristik speziell bei höheren Anforderungen bezüglich Umfangsgeschwindigkeit und Drücken nicht mehr in vollem Umfang gegeben.

Die Lebensdauer eines Trennschiebers wird hauptsächlich von Kolkverschleiß und

Radialverschleiß bestimmt. Unter dem Radialverschleiß (Breitenverschleiß) nimmt die Breite des Trennschiebers ab. Kolkverschleiß (Dickenverschleiß) bezeichnet den Verschleiß der zur Dickenabnahme des Trennschiebers führt. Durch den Axialverschleiß nimmt die Höhe des Trennschiebers ab (Höhenverschleiß). Dieser Effekt tritt jedoch in der Regel nur in geringem Ausmaß während des Einlaufens der Pumpe auf.

Die dieser Patentanmeldung zugrundeliegende Erfindung hatte deshalb die Aufgabe, die Gleit- und Verschleißeigenschaften von Kohlenstofffüller enthaltenden, kunstharzgebundenen Gleitwerkstoffkörpern bezüglich Dickenverschleiß und

Breitenverschleiß zu verbessern und Verfahren anzugeben, nach denen die verbesserten Gleitwerkstoffkörper mit geringem Aufwand, insbesondere ohne Zusatz hygroskopischer Verbindungen, wie etwa Phosphaten, hergestellt werden können.

Es konnte überraschend gefunden werden, dass eine Füllstoffkombination aus einer auf Naturgraphit basierenden Komponente und mindestens einer weiteren auf synthetischem Graphit basierenden Komponente die erwünschten Produktmerkmale erzeugt. Die auf Naturgraphit basierende Komponente sorgt für einen geringen Breitenverschleiß, während die mindestens eine auf synthetischem Graphit basierende Komponente den Dickenverschleiß reduziert. Der erste Teil der Aufgabe wird mit den Merkmalen des kennzeichnenden Teils des Patentanspruchs 1, und der zweite Teil der Aufgabe mit den Merkmalen des kennzeichnenden Teils des Patentanspruchs 5 gelöst.
Ein erfindungsgemäßer, aus Graphit und Kunstharzbinder bestehender Gleitwerkstoffkörper ist dadurch gekennzeichnet, dass sich der Graphitfüllstoff aus einer auf Naturgraphit basierenden Komponente und mindestens einer weiteren synthetisch hergestellten Komponente zusammensetzt.
Die auf Naturgraphit basierende Füllstoffkomponente besteht aus gereinigtem Naturgraphit, expandiertem Naturgraphit oder aufbereiteter Graphitfolie und ist im Gleitwerkstoffkörper zu 20 bis 40 Gewichtsprozent enthalten, während für die auf synthetischem Graphit basierende Füllstoffkomponente einer der folgenden Stoffe zu 20 bis 50 Gewichtsprozent im Gleitwerkstoffkörper enthalten sind: Elektrographit, Petrol-, Steinkohlenteerpech- oder Rußkoks, wobei die drei letztgenannten Stoffe in graphitierter Form verwendet werden. In den Fällen, da ein erfindungsgemäßer Gleitwerkstoffkörper aus einer ungeraden Anzahl von Schichten besteht, enthalten die beiden äußeren Schichten bevorzugt die mindestens eine auf synthetischem Graphit basierende Füllstoffkomponente.

Gemäß einer bevorzugten Ausführungsform dieser Erfindung werden gleichzeitig zwei auf synthetischem Graphit basierende Komponenten eingesetzt. Dabei handelt es sich um Elektrographit und graphitierten Rußkoks, welche neben der Naturgraphitkomponente zu je 15 bis 30 Gewichtsprozent im Gleitwerkstoffkörper enthalten sind.
Gemeinsames Merkmal aller Füllstoffkomponenten aus Graphit ist, dass sie feinkörnig bis staubförmig sind, d. h., dass ihr Maximalkorn nicht über 3 mm liegt. Die einzelnen Kornfraktionen einer Rezeptur können jedoch eine jeweils unterschiedliche und auf bestimmte Zwecke angepasste Feinheit und Kornverteilung haben.
Neben den Graphitfüllstoffen kann ein Kohlenstofffüller zugegeben werden, welcher vor allem die mechanischen Eigenschaften des Gleitwerkstoffkörpers verbessert. Hierzu gehören Ruß, Mesocarbon Microbeads, Nanoröhrenund Fullerene.

Neben oder zusätzlich zu einem Kohlenstofffüller kann der Körper noch weitere, dem Fachmann an sich bekannte, die Laufeigenschaften des Gleitwerkstoffkörpers beeinflussende Füllstoffe wie beispielsweise Siliciumdioxid, Siliciumcarbid, Aluminiumoxid, Talkum, Magnesiumoxid enthalten. Diese Stoffe weisen entweder selbst eine gewisse Gleitfähigkeit auf oder sie wirken in begrenztem Maße abrasiv und dienen beim Betrieb der Gleitwerkstoffkörper der Reinigung der Laufflächen von unerwünschten Filmen, die sich aus dem Materialabrieb der Gegenlaufwerkstoffe, gegebenenfalls im Zusammenwirken mit aus der Umgebungsatmosphäre aufgenommenen Stoffen gebildet haben.

Sämtliche Füllstoffe, nämlich Graphitfüllstoffe, Kohlenstofffüller und nicht aus Kohlenstoff bestehende Füller, sind im Gleitwerkstoffkörper an ihren Oberflächen mit einem Harzbinder überzogen und der Harzbinder bildet auch die Matrix, welche die Kornzwischenräume im Gleitwerkstoffkörper im wesentlichen porenfrei ausfüllt. Die maximale Verwendungstemperatur der erfindungsgemäßen Gleitwerkstoffkörper ist deshalb durch die obere Verwendungsgrenztemperatur für die eingesetzten Harze bestimmt. Als Binder werden bevorzugt Kunstharze wie beispielsweise Phenol-, Furan-, Epoxid-, Polyester-, Cyanatesterharze, oder auch Thermoplaste mit einer hohen Glasübergangstemperatur, die gegebenenfalls auch eine gewisse Gleitwirkung haben (Polyimide, Fluorpolymere wie PVDF, Polyphenylensulfid) verwendet. Für die Anwendungen der Gleitwerkstoffkörper unter normalen Betriebsbedingungen werden wegen ihres günstigen Preis-Leistungsverhältnisses bevorzugt Phenol- und/oder Furanharze eingesetzt. Besonders bevorzugt sind Phenolharze des Novolak-Typs, denen zum Aushärten Formaldehyd abspaltende Substanzen wie z.B. Hexamethylentetramin zugesetzt werden. Die Verwendung von Naturharzen oder modifizierten Naturharzen als Bindemittel ist möglich, doch sind die Kunstharze besser an die jeweiligen Anforderungen anpassbar und werden deshalb überwiegend verwendet. Der Anteil an Binderharz im Gleitwerkstoffkörper liegt vorzugsweise im Bereich von 20 bis 40 Gewichtsprozent.
Im einfachstem Fall besteht ein erfindungsgemäßer Gleitwerkstoffkörper aus je einer, eine auf Naturgraphit basierende Füllstoffkomponente enthaltende, Schicht und einer, mindestens eine auf synthetischem Graphit basierende Füllstoffkomponente enthaltende, Schicht. In den Fällen, da ein erfindungsgemäßer Gleitwerkstoffkörper aus einer ungeraden Anzahl von Schichten besteht, enthalten die beiden äußeren Schichten bevorzugt die mindestens eine auf synthetischem Graphit basierende Füllstoffkomponente. Im Falle einer geraden Schichtanzahl muss der Trennschieber so in den Schlitz des Rotors eingesetzt werden, dass die Schicht, welche die mindestens eine auf synthetischem Graphit basierende Füllstoffkomponente enthält, auf der von der Drehrichtung des Rotors abgewandten Seite anliegt.
Die Dicke der einzelnen Schichten sowie deren Zusammensetzung sind so aufeinander abgestimmt, dass eine unterschiedliche Längenausdehnung der einzelnen Schichten unter Wärmeeinwirkung vermieden wird.
Das Herstellen von erfindungsgemäßen Gleitwerkstoffkörpern geschieht durch Mischen der Trockengutkomponenten mit dem Binderharz, Herstellen eines für ein Formgeben geeigneten Granulats oder Pulvers aus dem gemischten Gut, was vorzugsweise durch Zerkleinern und Klassieren geschieht, Formgebung durch Warmpressen in Gesenk- oder isostatischen Pressen, Extrudieren mittels beispielsweise Strangpressen, Spritzpressen oder Spritzgießen, gegebenenfalls gefolgt von Tempern der erhaltenen Formkörper, um das Binderharz voll auszuhärten. Dem kann sich eine mechanische Dimensionierung anschließen.
Die Verwirklichung dieses generellen Verfahrensganges kann im wesentlichen nach zwei Varianten geschehen.
Beim Arbeiten nach der ersten Variante werden die aus Graphit bestehenden Füllstoffkomponenten, gegebenenfalls ein Kohlenstofffüller und mindestens ein nicht aus Kohlenstoff bestehender Füllstoff miteinander ohne Zugabe eines Bindemittels bis zum Erreichen einer gleichmäßigen Verteilung der Komponenten gemischt, sodann die Trockengutmischung mit einem Kunstharzbindemittel gemischt und dann das so erhaltene Mischgut nach einer der im Vorstehenden oder Nachstehenden beschriebenen Verfahrensweisen zu einem Formkörper verarbeitet.
Beim Arbeiten nach der zweiten Variante werden die aus Graphit bestehenden Füllstoffkomponenten, gegebenenfalls ein Kohlenstofffüller und mindestens ein nicht aus Kohlenstoff bestehender Füllstoff und ein Bindemittel aus Kunstharz gemäß vorgegebener Rezeptur miteinander bis zum Erreichen einer gleichmäßigen Verteilung der Komponenten gemischt und dann das so erhaltene Mischgut nach einer der im Vorstehenden oder Nachstehenden beschriebenen Verfahrensweisen unter Zuhilfenahme einer Formgebungseinrichtung zu einem Formkörper verarbeitet. Zur erfindungsgemäßen Herstellung eines geschichteten Gleitwerkstoffkörpers werden die beiden Verfahrensvarianten variiert indem jeweils nur die NaturgraphitKomponente oder die mindestens eine Synthetikgraphit-Komponente mit den weiteren Rezepturbestandteilen gemischt wird.

Als Komponenten für das Zusammensetzen der Mischungen, nämlich aus Graphit bestehenden Füllstoffkomponenten, den gegebenenfalls zuzusetzenden weiteren Füllstoffen und den jeweiligen Harzbindern, werden bei den Verfahren zum Herstellen der Gleitwerkstoffkörper die im vorstehenden bei der Beschreibung der Zusammensetzung der Gleitwerkstoffkörper aufgeführten Stoffe gemäß den jeweiligen Rezepturvorgaben und in Anpassung an die jeweiligen Anwendungserfordernisse verwendet.

Bei der Durchführung der Verfahren kann das Binderharz den Feststoffkomponenten entweder in Pulverform oder in pastöser, flüssiger, gelöster oder in Form einer Aufschlämmung zugegeben und dann zusammen mit den Feststoffanteilen weiterverarbeitet werden. Das Binderharz kann mit den Trockengutkomponenten außer bei Raumtemperatur auch bei einer Temperatur vermischt werden, die oberhalb des Schmelzbereichs oder der Glasübergangstemperatur des jeweils verwendeten Harzes oder der jeweils verwendeten Harzmischung liegt.

Im folgenden werden einige bevorzugte Verfahrensvarianten für die Herstellung von erfindungsgemäßen Gleitwerkstoffkörpern beschrieben.

Nach einer ersten bevorzugten Variante können die Trockengutkomponenten, also die aus Graphit bestehenden Füllstoffkomponenten und die gegebenenfalls zuzusetzenden weiteren Füllstoffe, und das Binderharz in Pulverform in einem ersten Verfahrensschritt in einem Mischer bis zum Erreichen einer gleichmäßigen Verteilung der Komponenten gemischt werden. Sodann wird das Mischgut in einem beheizten Mischaggregat, das eine hohe Knetwirkung hat, etwa einem Walzenmischwerk oder Kalander, bei einer Temperatur, die oberhalb des Erweichungsbereichs des Binderharzes liegt, gemischt und dabei das Binderharz aufgeschmolzen. Das heiße Mischgut wird in Form einer Bahn oder eines Fells ausgetragen und nach dem Abkühlen gebrochen und gemahlen. Letzteres kann beispielsweise auf einer Stift-oder einer Zahnscheibenmühle geschehen. Das Mahlaggregat wird dazu so eingestellt, dass beim Zerkleinern und nachfolgendem Sieben ein Mahl- und Siebgut mit folgender Kornzusammensetzung erhalten wird: 40 bis 60% 1 bis 2 mm, bis zu 30% größer 2 mm und bis zu 30% größer 600 µm bis 1 mm. Der Feinanteil von kleiner oder gleich 600 µm wird beim Sieben abgetrennt und dem Knetprozess wieder zugeführt. Dieses Mahlgut wird durch Warmpressen, Spritzgießen oder Spritzpressen zu Formkörpern verpresst. Die so erhaltenen Formkörper werden dann bei Temperaturen von 160°C bis 250°C zum Vernetzen des Binders getempert, um entweder erfindungsgemäße Gleitwerkstoffkörper oder Vorproduktkörper zu ergeben, aus denen durch mechanisches Bearbeiten Gleitwerkstoffkörper hergestellt werden können.

Das nach dem Zerkleinerungsschritt erhaltene Mahlgut kann gemäß einer Untervariante des Verfahrens durch Mahlen weiter zerkleinert werden, bis eine Feinheit von d50% ungefähr 40 µm erreicht ist oder es wird nach dem Mahlen durch Klassieren eine Kornfraktion dieser Feinheit erzeugt. Diese Feinkornfraktion wird sodann in einer Gesenkpresse mit einer heizbaren Matrize oder einer zum Warmverpressen geeigneten isostatischen Presse unter einem solchen Temperaturprogramm zu Formkörpern verpresst, bei dem der Harzbinder zunächst schmilzt, dann aber aushärtet. Vorzugsweise wird hierbei bei Temperaturen von 160 bis 200°C gearbeitet. Falls erforderlich, müssen die so erhaltenen Formkörper nach dem Entformen zum vollständigen Aushärten des Binderharzes noch getempert werden. Nach einer weiteren Variante werden den gemäß Rezeptur in einem Mischer zusammengeschütteten Ausgangsstoffen, nämlich die aus Graphit bestehenden Füllstoffkomponenten, die gegebenenfalls zuzusetzenden weiteren Füllstoffe und Binderharz, bezogen auf die Gesamtheit der vorgelegten Komponenten, 5 bis 20 Gewichtsprozent eines Lösungsmittels, das den Harzbinder zu lösen vermag, zugesetzt. Bei Verwendung von Phenolharzen werden dazu vorzugsweise ca. 10 Gew.-% Ethanol verwendet. Die Mischung wird sodann zunächst bis zum Erreichen ausreichender Homogenität, gegebenenfalls unter leichtem Erwärmen gemischt. Dabei wird die flüssigkeitszugängliche Oberfläche aller Feststoffteilchen mit einer dünnen Schicht der Binderharzlösung überzogen. Danach wird unter weiterem Mischen durch Erhöhen der Temperatur im Mischgut das Lösungsmittel so weit abgedampft, bis die Mischung aufbricht und als schollige bis granulierte Masse vorliegt. Nach dem Austragen aus dem Mischer wird die Masse, gegebenenfalls nach einem Zerkleinerungsschritt, klassiert. Bevorzugt werden die Anteile mit Korngrößen über 0,6 mm durch Spritzgießen oder Spritzpressen und die verbliebenen Feinanteile durch Warmpressen zu Formkörpern verarbeitet, die, um zu fertigen Gleitwerkstoffkörpern zu kommen, gegebenenfalls noch zum Endvernetzen des Binderharzes getempert werden müssen.

Nach einer weiteren bevorzugten Variante des Verfahrens werden alle Mischungskomponenten, einschließlich des fein pulverisierten Binders, in einem Mischer bis zur vollständigen Vergleichmäßigung der Mischung gemischt. Nach dem Austragen wird das Pulver bei Raumtemperatur in der Matrize einer Gesenkpresse oder in einer anderen geeigneten Presseinrichtung bei weniger als 10 bar zu einem Vorformling verpresst.

Diese Vorformlinge werden danach in die heizbare Pressform einer Gesenkpresse oder in den Formbehälter einer geheizten isostatischen Presse überführt und dort bei einer Temperatur, bei der das Binderharz flüssig vorliegt, zu einem Formkörper verpresst. Danach müssen gegebenfalls die erhaltenen Formkörper zum vollständigen Vemetzen des Harzbinders noch bei Temperaturen von 130 bis 250°C getempert werden.

Eine Variation dieses Verfahrens zur Herstellung geschichteter Gleitwerkstoffkörper besteht darin, dass im ersten Schritt nur entweder eine auf Naturgraphit basierende oder mindestens eine auf synthetischem Graphit basierende Füllstoffkomponente sowie weitere Mischungskomponenten, einschließlich des fein pulverisierten Binders, gemischt werden. Zur Herstellung eines geschichteten Gleitwerkstoffkörpers werden anschließend die Vorformlinge, welche nur entweder eine auf Naturgraphit basierende oder mindestens eine auf synthetischem Graphit basierende Füllstoffkomponente enthalten, bei Raumtemperatur getrennt voneinander verpresst. Diese Vorformlinge werden abwechselnd horizontal übereinander gestapelt, wobei bei ungerader Anzahl von Schichten die beiden äußeren Schichten bevorzugt die auf synthetischem Graphit basierende Füllstoffkomponente enthalten. Dieser Stapel wird dann in die heizbare Pressform einer Gesenkpresse oder in den Formbehälter einer geheizten isostatischen Presse überführt und dort bei einer Temperatur, bei der das Binderharz flüssig vorliegt, zu einem Formkörper verpresst und abschließend bei Bedarf getempert.

Geschichtete Gleitwerkstoffkörper können auch hergestellt werden, indem die Mischungen, welche nur entweder eine auf Naturgraphit basierende oder mindestens eine auf synthetischem Graphit basierende Füllstoffkomponente sowie weitere Mischungskomponenten enthalten, abwechselnd in der Matrize einer Gesenkpresse oder in einer anderen geeigneten Presseinrichtung bei Raumtemperatur eingefüllt werden, wobei bei ungerader Anzahl von Schichten die beiden äußeren Schichten bevorzugt die mindestens eine auf synthetischem Graphit basierende Füllstoffkomponente enthalten, und aus diesen Schichten anschließend ein geschichteter Vorpressling verpresst wird.

Dieser Vorpressling wird dann in die heizbare Pressform einer Gesenkpresse oder in den Formbehälter einer geheizten isostatischen Presse überführt und dort bei einer

Temperatur, bei der das Binderharz flüssig vorliegt, zu einem Formkörper verpresst und abschließend bei Bedarf getempert.

In einer weiteren Variante zur Herstellung geschichteter Gleitwerkstoffkörper werden die Mischungen, welche nur entweder eine auf Naturgraphit basierende oder mindestens eine auf synthetischem Graphit basierende Füllstoffkomponente sowie weitere Mischungskomponenten enthalten, abwechselnd in die Matrize einer Gesenkpresse oder in einer anderen geeigneten Presseinrichtung bei Raumtemperatur eingefüllt und die eingefüllte Schicht umgehend verpresst, wobei bei ungerader Anzahl von Schichten die beiden äußeren Schichten bevorzugt die mindestens eine auf synthetischem Graphit basierende Füllstoffkomponente enthalten.

So hergestellte geschichtete Vorpresslinge werden dann in die heizbare Pressform einer Gesenkpresse oder in den Formbehälter einer geheizten isostatischen Presse überführt und dort bei einer Temperatur, bei der das Binderharz flüssig vorliegt, zu Formkörpern verpresst und diese anschließend bei Bedarf getempert.

Gemäß einer andere Variante zur Herstellung geschichteter Gleitwerkstoffkörper werden die Mischungen, welche nur entweder eine auf Naturgraphit basierende oder mindestens eine auf synthetischem Graphit basierende Füllstoffkomponente sowie weitere Mischungskomponenten enthalten, getrennt voneinander bei einer Temperatur, die oberhalb des Erweichungsbereichs des Binderharzes liegt, zu Streifen extrudiert. Aus diesen Streifen werden Vorformlinge geschnitten, welche anschließend in einer heizbare Pressform einer Gesenkpresse oder im Formbehälter einer geheizten isostatischen Presse abwechselnd horizontal übereinander gestapelt werden, wobei bei ungerader Anzahl von Schichten die beiden äußeren Stücke bevorzugt die auf synthetischem Graphit basierende Füllstoffkomponente enthalten. Anschließend wird der so erhaltene Stapel dort bei einer Temperatur, bei der das Binderharz flüssig vorliegt, zu einem Formkörper verpresst und abschließend bei Bedarf getempert.

Im folgenden wird die Erfindung anhand von Ausführungsbeispielen weiter erläutert:

### Beispiel 1

Es wurden 32 Gewichtsteile Naturgraphit von einer Körnung d50% = 19 µm, jeweils 16 Gewichtsteile Elektrographit von einer Körnung d50% = 24 µm sowie graphitierter Rußkoks von einer Körnung d50% = 18µm und als Bindemittel 36 Gewichtsteile eines Phenol-Novolak/Hexamethylentetramin-Gemisches (Anteil Hexamethylentetramin: 11 Gew.-%) von einer Körnung 10% >45µm in einer Menge von insgesamt 15 kg in einem Pflugscharmischer intensiv gemischt. Das auf diese Weise homogenisierte Trockengut wurde sodann bei Raumtemperatur auf einer Gesenkpresse in einer Matrize (Hersteller Bussmann, Typ HPK 60) unter einem Druck von 18 MPa zu einem Vorformling mit den Abmessungen 150 × 200 × 12 mm³ verpresst. Nach dem Entnehmen aus der Gesenkpresse wurde der so hergestellte Vorformling in eine den Außenabmessungen des Körpers entsprechende Form einer Heißpresse überführt und dort bei einer Temperatur von 180°C unter einem Druck von 20 MPa 15 Minuten lang abermals verpresst. Bei diesem Vorgang wurde der Binder aufgeschmolzen und weitgehend ausgehärtet. Nach dem Entnehmen aus der Heißpresse wurde der Körper in einen Temperofen überführt und dort zum Nachhärten des Binders 38 Stunden lang bei 180°C nachbehandelt. Nach dem Entnehmen des Körpers aus dem Ofen und dem Abkühlen wurden aus dem Körper nach bekannten mechanischen Bearbeitungsverfahren Trennschieber der Abmessungen 95 × 43 × 4 mm³ hergestellt.

### Beispiel 2

Es wurden getrennt voneinander zwei Graphitmischungen mit jeweils 36 Gewichtsteilen eines Phenol-Novolak/Hexamethylentetramin-Gemisches (Anteil Hexamethylentetramin: 11 Gew.-%) von einer Körnung 10% >45µm in einer Menge von je 15 kg in einem Pflugscharmischer intensiv gemischt. Die eine Mischung enthielt 64 Gewichtsteile Naturgraphit von einer Körnung d50% = 19 µm, während die andere Mischung jeweils 32 Gewichtsteile Elektrographit von einer Körnung d50% = 24 µm sowie graphitierten Rußkoks von einer Körnung d50% = 18µm enthielt. Die homogenisierten Trockengutmischungen wurden sodann separat voneinander bei Raumtemperatur auf einer Gesenkpresse in einer Matrize (Hersteller Bussmann, Typ HPK 60) unter einem Druck von 18 MPa zu Vorformlingen mit den Abmessungen 150 × 200 × 5 mm³ verpresst. Nach dem Entnehmen aus der Pressform wurde zunächst ein, die auf synthetischem Graphit basierenden Füllstoffkomponenten enthaltender, Vorformling in eine den Außenabmessungen des Körpers entsprechende Form einer Heißpresse eingelegt. Darauf wurde ein, die auf Naturgraphit basierende Füllstoffkomponente enthaltender, Vorformling gestapelt gefolgt von einem weiteren Vorformling, der die auf synthetischem Graphit basierenden Füllstoffkomponenten enthielt. Dieser Stapel aus drei Vorformlingen wurde in der Heißpresse bei einer Temperatur von 180°C unter einem Druck von 20 MPa 20 Minuten lang verpresst. Bei diesem Vorgang wurde der Binder aufgeschmolzen und weitgehend ausgehärtet. Nach dem Entnehmen aus der Heißpresse wurde der Formkörper in einen Temperofen überführt und dort zum Nachhärten des Binders 38 Stunden lang bei 180°C nachbehandelt. Nach dem Entnehmen des Körpers aus dem Ofen und dem Abkühlen wurden aus dem Formkörper nach bekannten mechanischen Bearbeitungsverfahren Trennschieber der Abmessungen 95 × 43 × 4 mm³ hergestellt.

### Vergleichsbeispiel 1

Zum Vergleich wurden 64 Gewichtsteile Naturgraphit von einer Körnung d50% = 19 µm mit 36 Gewichtsteilen eines Phenol Novolak/Hexamethylentetramin-Gemisches (Anteil Hexamethylentetramin: 11 Gew.-%) vermischt und, wie in Beispiel 1 beschrieben, daraus Trennschieber der Abmessungen 95 × 43 × 4 mm³ hergestellt.

### Vergleichsbeispiel 2

Zum Vergleich wurden 64 Gewichtsteile synthetischer Graphit mit einem Anteil von je 32 Gewichtsteilen Elektrografit von einer Körnung d50% = 24 µm sowie graphitiertem Rußkoks von einer Körnung d50% = 18µm mit 36 Gewichtsteilen eines Phenol Novolak/Hexamethylentetramin-Gemisches (Anteil Hexamethylentetramin: 11 Gew.-%) vermischt und, wie in Beispiel 1 beschrieben, daraus Trennschieber der Abmessungen 95 × 43 × 4 mm³ hergestellt.

### Vergleichsbeispiel 3

Es wurden analog zum Vergleichsbeispiel 1 57 Gewichtsteile Naturgraphit von einer Körnung d50% = 19 µm mit 7 Gewichtsteilen Zinkphosphat mit einer Körnung d50% = 7 µm sowie 36 Gewichtsteilen eines Phenol Novolak/Hexamethylentetramin-Gemisches (Anteil Hexamethylentetramin: 11 Gew.-%) vermischt und daraus Trennschieber der Abmessungen 95 × 43 × 4 mm³ hergestellt.

### Vergleichsbeispiel 4

Es wurden analog zum Vergleichsbeispiel 2 57 Gewichtsteile synthetischer Graphit mit einem Anteil von je 28,5 Gewichtsteilen Elektrographit von einer Körnung d50% = 24 µm sowie graphitiertem Rußkoks von einer Körnung d50% = 18 µm mit 7 Gewichtsteilen Zinkphosphat mit einer Körnung d50% = 7 µm sowie mit 36 Gewichtsteilen eines Phenol Novolak/Hexamethylentetramin-Gemisches (Anteil Hexamethylentetramin: 11 Gew.-%) vermischt und daraus Trennschieber der Abmessungen 95 × 43 × 4 mm³ hergestellt.

Die so hergestellten Trennschieber wurden in trockener Luft auf einem Vielzellenverdichter der Firma "Gebrüder Becker", Typ 4.40 getestet. Die Maschinen wurden mit 800 mbar (Überdruck) belastet. Die Umfangsgeschwindigkeit betrug 14 m/s. Die Belastung bei Überdruck beansprucht Trennschieber stärker als eine Belastung bei Unterdruck und ist somit aussagekräftiger als Letztere. Die dabei erhaltenen Messwerte sind in Tabelle 1 zusammengefasst:

**Tabelle 1**

| | Breitenverschleiß µm/100h | Dickenverschleiß µm/100h |
|---|---|---|
| Beispiel 1 | 271 | 13,1 |
| Beispiel 2 | 257 | 12,5 |
| Vergleichsbeispiel 1 | 289 | 21,9 |
| Vergleichsbeispiel 2 | 1535 | 7,0 |
| Vergleichsbeispiel 3 | 290 | 19,4 |
| Vergleichsbeispiel 4 | 1540 | 6,9 |

Der Vergleich der in Tabellen 1 wiedergegebenen Messwerte zeigt eindeutig, dass die erfindungsgemäßen Trennschieber verbesserte Verschleißeigenschaften aufweisen. Diese sind bei den, wie im Beispiel 2 aus Schichten aufgebauten, erfindungsgemäßen Trennschiebern am meisten ausgeprägt. Man erkennt anhand von Tabelle 1 auch deutlich, dass die Verbesserungen beim Breitenverschleiß vor allem auf die auf Naturgraphit basierende Füllstoffkomponente zurückzuführen ist, während der Dickenverschleiß durch die auf synthetischem Graphit basierende Füllstoffkomponente erreicht wird. Dabei wird überraschend bei den erfindungsgemäßen Trennschiebern ein Breitenverschleiß erreicht, der sogar noch unter dem der Trennschieber gemäß Vergleichsbeispiel 1, welche ausschließlich die auf Naturgraphit basierende Füllstoffkomponente enthalten, liegt.
Außerdem zeigt die Gegenüberstellung der Vergleichsbeispiele 1 und 2 mit Vergleichsbeispielen 3 und 4, dass durch Zugabe von Zinkphosphat nur eine unwesentliche Verbesserung der Verschleißeigenschaften herkömmlicher Trennschieber erreicht wird.

Die erfinderische Lösung hat folgende Vorteile:

Es werden Gleitwerkstoffkörper für die Anwendung unter Trockenlaufbedingungen mit erheblich verbesserten Verschleißeigenschaften bereitgestellt.
Die Gleitwerkstoffkörper können ohne Zusatz hygroskopischer Verbindungen, wie etwa Phosphaten, hergestellt werden.
Die erfindungsgemäßen Gleitwerkstoffkörper können mittels verschiedener bekannter Produktionsverfahren hergestellt werden. Das Formgeben ist auch durch Spritzgießen und Spritzpressen möglich.

## Patentansprüche

1. Aus Graphit und Kunstharzbinder bestehender. Gleitwerkstoffkörper, **dadurch gekennzeichnet, dass** er sich zu 20 bis 40 Gewichtsprozent aus einer auf Naturgraphit basierenden Komponente aus der Gruppe gereinigter Naturgraphit, expandierter Naturgraphit oder aufbereitete Graphitfolie und zu 20 bis 50 Gewichtsprozent aus mindestens einer weiteren, auf synthetischem Graphit basierenden, Komponente aus der Gruppe Elektrographit, Petrolkoks in graphitierter Form, Steinkohlenteerpechkoks in graphitierter Form, Rußkoks in graphitierter Form zusammensetzt, wobei keine hygroskopischen Verbindungen, wie etwa Phosphate, zugesetzt werden, und wobei er aus mehreren horizontalen Schichten besteht, welche abwechselnd entweder eine auf Naturgraphit basierende Komponente oder mindestens eine auf synthetischem Graphit basierende Komponente enthalten, wobei bei ungerader Anzahl von Schichten die beiden äußeren Schichten bevorzugt die mindestens eine auf synthetischem Graphit - basierende Füllstoffkomponente enthalten.

2. Gleitwerkstoffkörper gemäß Patentanspruch 1, **dadurch gekennzeichnet, dass** er zusätzlich einen Kohlenstofffüller aus der Gruppe Ruß, Mesocarbon Microbeads; Nanoröhren, Fullerene zu weniger als 3 Gewichtsprozent enthält.

3. Gleitwerkstoffkörper gemäß Patentanspruch 1, **dadurch gekennzeichnet, dass** er zusätzlich mindestens einen nicht aus Kohlenstoff bestehenden Füllstoff aus der Gruppe Siliciumdioxid, Siliciumcarbid, Aluminiumoxid, Talkum, Magnesiumoxid zu weniger als 3 Gewichtsprozent enthält.

4. Gleitwerkstoffkörper gemäß einem oder mehreren der Patentansprüche 1 bis 3, **dadurch gekennzeichnet, dass** er mindestens einen Binder aus der Gruppe Phenolharze, Furanharze, Epoxidharze, Polyphenylensulfidharze, Cyanatesterharze zu einem Anteil von 20 bis 40 Gewichtsprozent enthält.

5. Verfahren zum Herstellen eines geschichteten Gleitwerkstoffkörpers **dadurch gekennzeichnet, dass** getrennt voneinander eine auf Naturgraphit basierende Füllstoffkomponente sowie mindestens eine auf synthetischem Graphit basierende Füllstoffkomponente in körniger oder pulveriger Form mit mindestens einem Bindemittel aus Kunstharz bis zum Erreichen einer gleichmäßigen Verteilung der Komponenten gemischt werden, die so erhaltenen Mischungen in abwechselnder Schichtfolge mittels einer Formgebungseinrichtung unter erhöhter Temperatur zu einem Formkörper verarbeitet werden, wobei bei ungerader Anzahl von Schichten die beiden äußeren Schichten bevorzugt die mindestens eine auf synthetischen Graphit basierende Füllstoffkomponente enthalten.

6. Verfahren gemäß Patentanspruch 5, **dadurch gekennzeichnet, dass** zunächst die kohlenstoffhaltigen Füllkomponenten miteinander ohne Zugabe eines Bindemittels bis zum Erreichen einer gleichmäßigen Verteilung gemischt werden und sodann die erhaltene Mischung mit mindestens einem Kunstharzbindemittel gemischt wird.

7. Verfahren gemäß Patentanspruch 5 und/oder 6, **dadurch gekennzeichnet, dass** das Vermischen mit dem mindestens einen Bindemittel bei Raumtemperatur erfolgt.

8. Verfahren gemäß einem oder mehreren der Patentansprüche 5 bis 7, **dadurch gekennzeichnet, dass** das Vermischen mit dem mindestens einen Bindemittel bei einer Temperatur erfolgt, die oberhalb des Schmelzbereichs der als Bindemittel verwendeten Kunstharze liegt.

9. Verfahren gemäß einem oder mehreren der Patentansprüche 5 bis 8, **dadurch gekennzeichnet, dass** das mindestens eine Bindemittel in Pulverform zugesetzt wird.

10. Verfahren gemäß einem oder mehreren der Patentansprüche 5 bis 8, **dadurch gekennzeichnet, dass** das Bindemittel in pastöser, flüssiger, gelöster oder aufgeschlämmter Form zugesetzt wird.

11. Verfahren gemäß einem oder mehreren der Patentansprüche 5 bis 10, **dadurch gekennzeichnet, dass** das erhaltene Mischgut vor dem Formgeben zerkleinert und klassiert wird.

12. Verfahren gemäß einem oder mehreren der Patentansprüche 5 bis 11, **dadurch gekennzeichnet, dass** das Mischgut durch Spritzgießen oder Spritzpressen zu Formkörpern verarbeitet wird.

13. Verfahren gemäß einem oder mehreren der Patentansprüche 5 bis 11, **dadurch gekennzeichnet, dass** das Mischgut bei Raumtemperatur in einer Gesenk- oder Doppelbandpresse bei weniger als 10 bar zu Vorpresslingen gepresst wird, welche anschließend durch Warmpressen zu Formkörpern verarbeitet werden.

14. Verfahren gemäß einem oder mehreren der Patentansprüche 5 bis 13, **dadurch gekennzeichnet, dass** das Mischgut oder die daraus gemäß Anspruch 13 hergestellten Vorpresslinge durch Warmpressen in einer heizbaren Pressform einer Gesenkpresse oder im Formbehälter einer geheizten isostatischen Presse bei Temperaturen zu Formkörpern verarbeitet wird, die oberhalb des Erweichungsbereichs bzw. der Glastemperatur, und unterhalb der Zersetzungstemperatur der als Binder verwendeten Kunstharze liegt.

15. Verfahren gemäß einem oder mehreren der Patentansprüche **5** bis **14**, **dadurch gekennzeichnet, dass** ein geschichteter Formkörper durch abwechselndes Einfüllen der Mischungen auf Basis von Naturgraphit sowie synthetischem Graphit jeweils umgehend gefolgt vom Verpressen der gerade eingefüllten Schicht erhalten wird.

16. Verfahren gemäß einem oder mehreren der Patentansprüche **5** bis **14**, **dadurch gekennzeichnet, dass** ein geschichteter Formkörper durch zunächst abwechselndes Einfüllen der Mischungen auf Basis von Naturgraphit sowie synthetischem Graphit gefolgt vom abschließenden Verpressen der eingefüllten Schichten erhalten wird.

17. Verfahren gemäß einem oder mehreren der Patentansprüche **5** bis **14**, **dadurch gekennzeichnet, dass** zunächst aus den Mischungen auf Basis von Naturgraphit sowie synthetischem Graphit getrennt voreinander gemäß Anspruch 13 Vorformlinge erzeugt werden, welche in abwechselnder Schichtfolge gestapelt werden und gemäß Anspruch **14** zum Formkörper verpresst werden.

18. Verfahren gemäß Patentanspruch **17**, **dadurch gekennzeichnet, dass** die Vorformlinge in Form von Streifen extrudiert und diese anschließend in passende Stücke geschnitten werden.

19. Verfahren gemäß einem oder mehreren der Patentansprüche **5** bis **18, dadurch gekennzeichnet, dass** zusätzlich ein aus Kohlenstoff bestehender Füllstoff aus der Gruppe Ruß, Mesocarbon Microbeads, Nanoröhren, Fullerene und mindestens ein nicht aus Kohlenstoff bestehender Füllstoff aus der Gruppe Siliciumdioxid, Siliciumcarbid, Aluminiumoxid, Talkum, Magnesiumoxid zugesetzt werden.

20. Verfahren gemäß einem oder mehreren der Patentansprüche **5** bis **19**, **dadurch gekennzeichnet, dass** der erhaltene Formkörper getempert wird.

21. Verfahren gemäß einem oder mehreren der Patentansprüche **5** bis **20**, **dadurch gekennzeichnet, dass** der erhaltene Formkörper durch Fräsen, gefolgt von Feindrehen, Feinschleifen, Honen und/ oder Polieren auf Endkontur bearbeitet wird.

## Claims

1. Sliding material body comprising graphite and synthetic resin binder, **characterized in that** it is composed of from 20 to 40% by weight of a component which is based on natural graphite and is selected from the group consisting of purified natural graphite, expanded natural graphite or processed graphite sheet and from 20 to 50% by weight of at least one further component which is based on synthetic graphite and is selected from the group consisting of electrographite, petroleum coke in graphitized form, hard coal tar pitch coke in graphitized form, carbon black coke in graphitized form, where no hydroscopic compounds such as phosphates are added and where the body consists of a plurality of horizontal layers which alternately contain either a component based on natural graphite or at least on one component based on synthetic graphite, where in the case of an odd number of layers the two outer layers preferably contain the at least one filler component based on synthetic graphite.

2. Sliding material body according to Claim **1**, **characterized in that** it additionally contains a carbon filler selected from the group consisting of carbon black, mesocarbon microbeads, nanotubes, fullerenes in an amount of less than 3% by weight.

3. Sliding material body according to Claim **1**, **characterized in that** it additionally contains at least one filler which does not consist of carbon and is selected from the group consisting of silicon dioxide, silicon carbide, aluminium oxide, talc, magnesium oxide in an amount of less than 3% by weight.

4. Sliding material body according to one or more of Claims 1 to 3, **characterized in that** it contains at least one binder selected from the group consisting of phenolic resins, furan resins, epoxy resins, polyphenylene sulphide resins, cyanate ester resins in an amount of from 20 to 40% by weight.

5. Process for producing a layered sliding material body, **characterized in that** a filler component based on natural graphite and at least one filler component based on synthetic graphite in granular or pulverulent form are mixed separately from one another with at least one binder composed of synthetic resin until uniform distribution of the components is achieved, the mixtures obtained in this way are processed in alternate layer sequence by means of a shaping device at elevated temperature to give a shaped body, where in the case of an odd number of layers the two outer layers preferably contain the at least one filler component based on synthetic graphite.

6. Process according to Claim **5**, **characterized in that** the carbon-containing filler components are firstly mixed with one another without addition of a binder until a uniform distribution has been reached and the mixture obtained is then mixed with at least one synthetic resin binder.

7. Process according to Claim **5** and/or **6**, **characterized in that** mixing with the at least one binder is carried out at room temperature.

8. Process according to one or more of Claims **5** to **7**, **characterized in that** mixing with the at least one binder is carried out at a temperature which is above the melting range of the synthetic resins used as binder.

9. Process according to one or more of Claims **5** to **8**, **characterized in that** the at least one binder is added in powder form.

10. Process according to one or more of Claims **5** to **8**, **characterized in that** the binder is added in paste-like, liquid, dissolved or slurried form.

11. Process according to one or more of Claims **5** to **10**, **characterized in that** the mixture obtained is comminuted and classified before shaping.

12. Process according to one or more of Claims **5** to **11**, **characterized in that** the mixture is processed by injection moulding or injection pressing to produce shaped bodies.

13. Process according to one or more of Claims **5** to **11**, **characterized in that** the mixture is pressed at room temperature in a die press or double belt press at less than 10 bar to give precompacts which are subsequently processed by hot pressing to produce shaped bodies.

14. Process according to one or more of Claims **5** to **13**, **characterized in that** the mixture or the precompacts produced therefrom according to Claim **13** is processed by hot pressing in a heatable pressing mould of a die press or in the moulding container of a heated isostatic press to give shaped bodies at temperatures which are above the softening range or the glass transition temperature and below the decomposition temperature of the synthetic resins used as binder.

15. Process according to one or more of Claims **5** to **14**, **characterized in that** a layered shaped body is obtained by alternate introduction of the mixtures based on natural graphite and on synthetic graphite, in each case followed immediately by pressing of the layer introduced just before.

16. Process according to one or more of Claims **5** to **14**, **characterized in that** a layered shaped body is obtained by firstly alternate introduction of the mixtures based on natural graphite and on synthetic graphite followed by final pressing of the introduced layers.

17. Process according to one or more of Claims **5** to **14**, **characterized in that** precompacts are firstly produced from the mixtures based on natural graphite and on synthetic graphite separately from one another according to Claim 13 and are stacked in an alternate layer sequence and pressed according to Claim **14** to produce shaped bodies.

18. Process according to Claim **17**, **characterized in that** the precompacts are extruded in the form of strips and these are subsequently cut into appropriate pieces.

19. Process according to one or more of Claims 5 to **18**, **characterized in that** a filler which consists of carbon and is selected from the group consisting of carbon black, mesocarbon microbeads, nanotubes, fullerenes and at least one filler which does not consist of carbon and is selected from the group consisting of silicon dioxide, silicon carbide, aluminium oxide, talc, magnesium oxide are additionally added.

20. Process according to one or more of Claims **5** to **19**, **characterized in that** the shaped body obtained is heat treated.

21. Process according to one or more of Claims **5** to **20**, **characterized in that** the shaped body obtained is shaped to the final shape by milling, followed by fine turning, fine grinding, honing and/or polishing.

## Revendications

1. Corps en matériau coulissant, constitué de graphite et d'un liant de résine synthétique, **caractérisé en ce qu'**il est constitué de 20 à 40 pour cent en poids d'un composant à base de graphite naturel, sélectionné dans l'ensemble formé du graphite naturel épuré, du graphite naturel expansé ou d'une feuille de graphite traitée, et de 20 à 50 pour cent en poids d'au moins un autre composant à base de graphite synthétique, sélectionné dans l'ensemble formé de l'électrographite, du coke de pétrole sous forme graphitée, du coke de goudron de charbon sous forme graphitée, du coke de noir de carbone sous forme graphitée, aucun composé hygroscopique tel que par exemple le phosphate n'étant ajouté, le corps étant constitué de plusieurs couches horizontales qui contiennent en alternance un composant à base de graphite naturel et au moins un composant à base de graphite synthétique, les deux couches extérieures contenant de préférence le ou les composants de charge à base de graphite synthétique lorsque le nombre de couches est impair.

2. Corps en matériau coulissant selon la revendication 1, **caractérisé en ce qu'**il contient en outre moins de 3 pour cent en poids d'une charge de carbone sélectionnée dans l'ensemble formé du noir de carbone, des microbilles de mésocarbone, des nanotubes, des fullerènes.

3. Corps en matériau coulissant selon la revendication 1, **caractérisé en ce qu'**il contient en outre moins de 3 pour cent en poids d'au moins une charge non constituée de carbone sélectionnée dans l'ensemble formé du dioxyde de silicium, du carbure de silicium, de l'oxyde d'aluminium, du talc et de l'oxyde de magnésium.

4. Corps en matériau coulissant selon l'une ou plusieurs des revendications 1 à 3, **caractérisé en ce qu'**il contient de 20 à 40 pour cent en poids d'au moins un liant sélectionné dans l'ensemble des résines phénoliques, des résines de furane, des résines d'époxy, des résines de poly(sulfure de phénylène) et des résines d'ester de cyanate.

5. Procédé de fabrication d'un corps stratifié en matériau coulissant, **caractérisé en ce qu'**un composant de charge à base de graphite naturel ainsi qu'au moins un composant de charge à base de graphite synthétique sous forme de grains ou de poudre, sont mélangés séparément l'un de l'autre avec au moins un liant en résine synthétique jusqu'à atteindre une répartition uniforme des composants et **en ce que** les mélanges ainsi obtenus sont traités à haute température en succession de couches alternées au moyen d'un dispositif de moulage, pour obtenir un corps moulé, les deux couches extérieures contenant de préférence le ou les composants de charge à base de graphite synthétique lorsque le nombre de couches est impair.

6. Procédé selon la revendication 5, **caractérisé en ce que** les composants de charge contenant du carbone sont d'abord mélangés les uns avec les autres sans addition de liant jusqu'à obtenir une répartition uniforme, le mélange ainsi obtenu étant ensuite mélangé avec au moins une résine synthétique de liant.

7. Procédé selon les revendications 5 et/ou 6, **caractérisé en ce que** le mélange avec le ou les liants s'effectue à température ambiante.

8. Procédé selon l'une ou plusieurs des revendications 5 à 7, **caractérisé en ce que** le mélange avec le ou les liants s'effectue à une température située au-dessus de la plage de fusion de la résine synthétique utilisée comme liant.

9. Procédé selon l'une ou plusieurs des revendications 5 à 8, **caractérisé en ce que** le ou les liants sont ajoutés sous forme pulvérulente.

10. Procédé selon l'une ou plusieurs des revendications 5 à 8, **caractérisé en ce que** le liant est ajouté sous forme pâteuse, liquide, dissoute ou en suspension.

11. Procédé selon l'une ou plusieurs des revendications 5 à 10, **caractérisé en ce que** le produit mélangé obtenu est déchiqueté et classifié avant le moulage.

12. Procédé selon l'une ou plusieurs des revendications 5 à 11, **caractérisé en ce que** le produit mélangé est traité par moulage par injection ou moulage-compression pour obtenir des corps moulés.

13. Procédé selon l'une ou plusieurs des revendications 5 à 11, **caractérisé en ce que** le produit mélangé est comprimé à moins de 10 bars et à température ambiante dans une presse à estamper ou une presse à double bande pour former des ébauches comprimées qui sont ensuite transformées en corps moulés par compression à chaud.

14. Procédé selon l'une ou plusieurs des revendications 5 à 13, **caractérisé en ce que** le produit mélangé ou les ébauches comprimées à chaud obtenues à partir de lui selon la revendication 13 sont transformés en corps moulés dans un moule d'une presse d'estampage ou dans des récipients de moulage d'une presse isostatique chauffée à une température supérieure à la température d'amollissement ou à la température de transition vitreuse et inférieure à la température de décomposition de la résine utilisée comme liant.

15. Procédé selon l'une ou plusieurs des revendications 5 à 14, **caractérisé en ce qu'**il permet d'obtenir un corps moulé stratifié par injection alternée des mélanges à base de graphite naturel et des mélanges à base de graphite synthétique, suivie chaque fois par une compression de la couche qui vient d'être injectée.

16. Procédé selon l'une ou plusieurs des revendications 5 à 14, **caractérisé en ce qu'**il permet d'obtenir un corps moulé stratifié par injection alternée des mélanges à base de graphite naturel et des mélanges à base de graphite synthétique suivie par une compression des couches injectées.

17. Procédé selon l'une ou plusieurs des revendications 5 à 14, **caractérisé en ce qu'**à partir des mélanges à base de graphite naturel et des mélanges à base de graphite synthétique, on forme d'abord séparément des ébauches pré-moulées selon la revendication 13 qui sont ensuite empilées en successions alternées et comprimées en corps moulés selon la revendication 14.

18. Procédé selon la revendication 17, **caractérisé en ce que** les ébauches pré-moulées sont extrudées sous la forme de rubans, ceux-ci étant ensuite découpés en morceaux appropriés.

19. Procédé selon l'une ou plusieurs des revendications 5 à 18, **caractérisé en ce qu'**on y ajoute de plus une charge constituée de carbone et sélectionnée dans l'ensemble constitué de la suie, des microbilles de mésocarbone, des nanotubes, des fullerènes et d'au moins une charge non constituée de carbone, sélectionnée dans l'ensemble formé du dioxyde de silicium, du carbure de silicium, de l'oxyde d'aluminium, du talc et de l'oxyde de magnésium.

20. Procédé selon l'une ou plusieurs des revendications 5 à 19, **caractérisé en ce que** le corps moulé obtenu subit un traitement thermique.

21. Procédé selon l'une ou plusieurs des revendications 5 à 20, **caractérisé en ce que** le corps moulé obtenu est traité par fraisage et ensuite usinage fin, meulage fin, rodage et/ou polissage jusqu'à obtenir son contour final.
